# EUROPÄISCHE PATENTSCHRIFT

(11) **EP 1 044 318 B1**
(45) Veröffentlichungstag und Bekanntmachung des Hinweises auf die Patenterteilung: **14.05.2003**
(21) Anmeldenummer: 98962127.1
(22) Anmeldetag: 29.12.1998
(51) Int. Cl.: F01L 1/047

(54) **VERFAHREN ZUR HERSTELLUNG EINER GEBAUTEN NOCKENWELLE**
METHOD FOR PRODUCING A CONSTRUCTED CAM SHAFT
PROCEDE POUR PRODUIRE UN ARBRE A CAMES DEMONTABLE

(30) Priorität: 30.12.1997 EP 97122976
(43) Veröffentlichungstag der Anmeldung: 18.10.2000
(73) Patentinhaber: Battlogg, Stefan, 6771 St. Anton/Montafon (AT)
(72) Erfinder: Battlogg, Stefan, 6771 St. Anton/Montafon (AT)
(74) Vertreter: Hofinger, Engelbert, Dr.Dr.
(86) Internationale Anmeldenummer: AT9800323
(87) Internationale Veröffentlichungsnummer: WO99035373

(56) Entgegenhaltungen:
- EP-A- 0 407 761
- EP-A- 0 866 216
- FR-A- 552 028
- GB-A- 589 420
- GB-A- 2 298 909
- US-A- 2 473 417
- US-A- 5 218 882
- PATENT ABSTRACTS OF JAPAN vol. 012, no. 018 (M-660), 20. Januar 1988 & JP 62 177357 A (RIKEN CORP), 4. August 1987

## Beschreibung

Die Erfindung betrifft ein Verfahren zur Herstellung einer gebauten Nockenwelle, die auf einem Trägerstab zwischen Spannelementen axial eingespannte Nockenelemente, und gegebenenfalls auch Lager- und/oder Zwischenelemente aufweist.

Für die verdrehsichere Befestigung von Nockenwelleneiementen, insbesondere Nockenelementen, Antriebselementen und gegebenenfalls auch Lagerelementen auf einer Trägerwelle sind bereits eine Vielzahl von verschiedenen Möglichkeiten bekannt geworden. Spezielle Verfahren umfassen das Aufweiten einer Hohlwelle im Bereich der Nockenwellenelemente, die eine Durchstecköffnung aufweisen (EP-A 190 841, EP-A 282 166, EP-A 292 795, EP-A 303 845. EP-A 389 070), das Sintern der Nockenelemente aus Metallpulver auf der Welle (EP-A 364 028), das Einsetzen gewellter Spannhülsen zwischen eine längsgerillte Trägerwelle und das Nockenelement mit ebenfalls gerillter Durchstecköffnung (EP-A 745 757), das Festkleben der Nockenelemente auf einer längsgerillten Trägerwelle (EP-A 119 112), die Ausbildung umfangsgerillter Bereiche auf der Trägerwelle, die von den Nockenwellenelementen verformt werden (EP-A 486 876, EP-A 521 354), das Festschrauben der Nockenwellenelemente auf der Trägerwelle (WO-A 93/10336), das Festklemmen oder Verkeilen der Nockenwellenelemente auf der Trägerwelle (EP-A 170 187, EP-A 178 536, EP-A 178 537) usw. Allen gemeinsam ist eine zeit- und kostenaufwendige Herstellung.

Weiters ist auch die axiale Einspannung der Nockenwellenelemte zwischen einem festen Endflansch eines hohlen Trägerstabes und einer am anderen Ende in den Stab einschraubbaren Spannmutter bekannt (JP-A 7-158412). In einer Ausführung ist ein Zwischenelement als Hülse aus elastischem Material ausgebildet, deren Kompression beim Anziehen der endseitigen Spannmutter den Reibungsschluß zwischen allen Nockenwellenelementen und dem Trägerstab bewirkt. Auf diese Weise erfolgt die Übertragung der Drehmomente über die beiden radialen Stirnflächen der Nockenelemente. Andere Ausführungen der JP-A 7-158 412 zeigen axial geführte Keile od.dgl., die beim Anziehen der Spannmutter in einen Spalt zwischen den Nockenelementen und dem Trägerstab eindringen, und so eine hohe radiale Spannkomponente erzeugen.

Der Aufbau einer Nockenwelle ist auf diese Weise verhältnismäßig einfach, indem die Nockenwellenelemente, sowie Lager- und Zwischenelemente auf den Trägerstab aufgefädelt werden und nach Festlegung der Nockenelemente in der richtigen Winkelposition die endseitige Spannmutter angezogen wird. Die Einspannung erfolgt während und durch das Anziehen der Spannmutter, wobei aber exakte Spannkräfte auch mit Hilfe einer Drehmomentmessung nicht festlegbar sind. Es müssen daher immer hohe Sicherheitswerte einkalkuliert werden, die die Konstruktion schwerer machen und verteuern.

Die Erfindung strebt eine möglichst einfache Herstellung gebauter Nockenwellen an, in denen bestimmbare Spannkräfte auf die Nockenelemente wirken und deren richtige Winkelstellung sicherstellen.

Erfindungsgemäß wird dabei so vorgegangen, wie dies in Patentanspruch 1 beschreiben ist.

Folgende Möglichkeiten sind gegeben:
1. Einspannen aller Elemente der Nockenwelle zwischen einem durch einen festen Endflansch gebildeten Spannelement und einem nach dem Längenausgleich zu montierenden zweiten endseitigen Spannelement.
2. Einspannen aller Elemente der Nockenwelle zwischen zwei nach dem Längenausgleich zu montierenden endseitigen Spannelemente.
3. Einspannen aller Elemente der Nockenwelle zwischen zwei endseitigen fest mit dem Trägerstab verbundenen Spannelementen, wobei der Trägerstab nach dem Längenausgleich verdreht wird.
4. Einspannen jedes Nockenelementes zwischen je einem ersten vor dem Längenausgleich montierten und einem zweiten nach dem Längenausgleich zu montierenden Spannelement.
5. Einspannen jedes Nockenelementes zwischen je einem Paar nach dem Längenausgleich zu montierenden Spannelementen.
6. Einspannen jedes Nockenelementes zwischen zwei fest mit dem Trägerstab verbundenen Spannelementen, wobei der Trägerstab nach dem Längenausgleich verdreht wird.

Für den Längenausgleich durch äußere Einwirkung kommt vor allem eine elastische Dehnung des Trägerstabes durch Spannkräfte oder eine Wärmedehnung des Trägerstabes in Frage. Weiters ist insbesondere in den drei erstgenannten Fällen der gemeinsamen Einspannung aller Elemente der Nockenwelle (Nockenelemente, Lagerelemente, Zwischenelemente und gegebenenfalls auch ein Antriebselement) eine Kälteschrumpfung durchführbar. Eine Stauchung der Nockenwellenelemente durch Druckkräfte ist ebenfalls denkbar.

Nach erfindungsgemäßen Verfahren hergestellte gebaute Nockenwellen weisen verschiedene charakteristische Merkmale auf. So ist beispielsweise in einer ersten Ausführung vorgesehen, daß der Trägerstab zumindest ein axial beabstandetes Paar von Bohrungen aufweist, in die als Spannelemente aus dem Trägerstab vorstehende Splinte eingesteckt sind. Die Splinte können in dem aus dem Trägerstab vorstehenden Bereich eine Kante oder Schneide aufweisen, die eine geringfügige radiale Kerbe im anliegenden Nockenelement erzeugt, sodaß sich ein zusätzlicher Formschluß ausbildet.

In einer weiteren Ausführung weist der Trägerstab zumindest ein axial beabstandetes Paar von Umfangsnuten auf, in die als Spannelemente Federringe eingesetzt sind.

Eine dritte Ausführung sieht auf dem Trägerstab als Spannelemente zumindest ein axial beabstandetes Paar von festen Vorsprüngen vor, die den halben Umfang des Trägerstabes umfassen. In dieser Ausführung weisen die Nockenelemente keine zylindrische Bohrung sondern eine den Vorsprüngen entsprechende Nut auf. Die Nockenelemente können daher auf den Trägerstab in den von Vorsprüngen freien Bereich aufgeschoben und dort verdreht werden, bis die Nut des Nockenelementes mit der vorsprungfreien Umfangshälfte des Trägerstabes fluchtet. Die Vorsprünge spannen dann nach Aussetzen der äußeren Einwirkung jenen Bereich des Nockenelementes, der die Nut begrenzt. Die Ausführung spart getrennte Spannelemente ein, und ist insbesondere dann von Vorteil, wenn die Vorsprünge in über den Umfang des Trägerstabes verteilte Stege aufgeteilt sind, wobei jeder Steg gleich breit wie der Zwischenraum zwischen zwei Stegen ist. In diesem Fall weist das Nockenelement eine entsprechende Anzahl von Nuten auf.

In einer weiteren Ausführung ist vorgesehen, daß der Trägerstab zumindest ein axial beabstandetes Paar von Gewindeabschnitten aufweist, auf denen Spannelemente mit Innengewinde angeordnet sind. Ein über die Länge durchgehendes Gewinde ist ebenfalls möglich.

Anstelle der gemeinsamen Einspannung aller Nockenwellenelemente kann auch jedes Nockenelement einzeln zwischen einem axial beabstandeten Paar von Spannelementen in einer der vorstehenden Ausführungen eingespannt sein. Sind feste, über den Umfang verteilte Vorsprünge auf dem Trägerstab vorgesehen, so kann der Trägerstab ursprünglich durchgehende Längsstege aufweisen, die im Bereich jedes Nockenelementes abgearbeitet werden, sodaß jeweils eine Ringnut in der Tiefe der Längsnuten gebildet wird. Weist der Trägerstab Gewindeabschnitte auf, können diese beispielsweise nach einem Rollverfahren od. dgl. so hergestellt sein, daß die dazwischenliegenden gewindefreien Abschnitte einen geringeren Durchmesser aufweisen, und die inneren Spannelemente mit ihren Innengewinden darüber hinweggeschoben werden können. In den gewindefreien zylindrischen Abschnitten können die Lagerbereiche für eine direkte Lagerung vorgesehen werden.

Der Längenausgleich zwischen den unterschiedlichen axialen Erstreckungen erfolgt bevorzugt durch äußere Spannkräfte, wofür der Trägerstab durch einen Spannstab gebildet ist. Die elastische Längendehnung des Spannstabes liegt im Bereich zwischen 2 Promille und 1 Prozent, vorzugsweise zwischen 4 Promille und 6 Promille, und die Montagepositionen für die Spannelemente errechnen sich daher aus der axialen Erstreckung des oder der einzuspannenden Elemente verringert um die elastische Längendehnung. Der axiale Abstand zwischen den Montagepositionen der Spannelemente entspricht daher insbesondere 99.5 Prozent der axialen Erstreckung der einzuspannenden Elemente.

Für den Angriff einer Spannvorrichtung kann der Trägerstab an beiden Enden Gewinde aufweisen, auf die Zugmuttern od. dgl. aufgeschraubt werden, die nach der Übernahme der Spannkräfte durch die Spannelemente wieder abgenommen werden. Weist der Trägerstab endseitige Gewindeabschnitte auf, auf denen Spannelemente mit Innengewinde vorgesehen werden, so können die Gewindeabschnitte nach Art einer sogenannten "Dehnschraube" auch für den Angriff der Zugmuttern der Spannvorrichtung herangezogen werden.

In ähnlichen Bereichen zwischen 2 Promille und 5 Promille bewegt sich auch die durch thermische Einwirkung erzielbare Dehnung und Schrumpfung des Trägerstabes bzw. der Nockenwellenelemente, sodaß in diesem Fall der axiale Abstand zwischen den Montagepositionen der Spannelemente insbesondere bei 99,7 Prozent der axialen Erstreckung der einzuspannenden Elemente, liegt.

Das Antriebselement der Nockenwelle kann mit einem endseitigen Spannelement oder einem festen Endflansch des Trägerstabes drehfest verbunden sein. Ebenso ist es möglich, auch das Antriebselement zwischen zwei Spannelementen axial einzuspannen.

Gegebenenfalls ist es auch möglich, zumindest einige Nockenwellenelemente selbst als Spannelemente auszubilden, indem beispielsweise ihre mittlere Öffnung mit einem Innengewinde versehen wird. Die Fixierung erfolgt wiederum mittels eines zweiten Spannelementes, beispielsweise einer Gewindemutter.

Als Zwischenelemente zwischen Nockenelementen können in einer ersten Ausführung Lagerringe oder Lagerhülsen vorgesehen sein, die in Lagerblöcke einsetzbar sind. In einer weiteren Ausführung stellen die Zwischenelemente bloße Distanzringe oder Distanzhülsen dar, wobei diese gegebenenfalls auch nockenartige Steuerkurven tragen können.

Diese Lager- und/oder Zwischenelemente können in einer weiteren bevorzugten Ausführung beidseitige Spannflächen aufweisen und gegen die Klemmflächen zweier Nockenelemente gepreßt sein. Die Lager- und/oder Zwischenelemente weisen dadurch ein spulenartiges Aussehen auf.

Weiters können als Zwischenelemente auch Distanz- oder Beilagscheiben mit breiten Spannringflächen vorgesehen sein. Die Zwischenelemente sind bevorzugt in verschiedenen Längen bzw. Dicken vorgesehen, sodaß durch entsprechende Wahl von Stückzahl und Dicke alle erforderlichen Abstände zwischen den Nockenelementen eingestellt werden können.

Für eine gegebenenfalls erforderliche Erhöhung des Kraftschlusses zwischen den Spannflächen sind verschiedene Möglichkeiten denkbar, die aus Gründen der vereinfachten Herstellung bevorzugt nur an den Zwischenelementen und/oder den Spannelementen, gegebenenfalls aber natürlich auch an den Nockenelementen vorgesehen werden können. Hier sieht beispielsweise eine erste Ausführung vor, daß die Spannflächen gerauht sind oder Unebenheiten aufweisen. Dies kann auch durch einen Reibbelag od. dgl. erzielt werden. Weiters können die Spannflächen auch mit einer Klebstoffbeschichtung versehen sein.

Als Belag bzw. Zwischenscheiben können auch Sicherungsscheiben ähnlich jenen von Schraubverbindungen eingesetzt werden, beispielsweise gezahnte Scheiben, gekrümmte Federscheiben usw. In einer anderen Ausführung ist vorgesehen, daß in der Beilagscheibe aus der Spannfläche in axialer Richtung vorstehende, insbesondere gehärtete Spitzen vorgesehen sind, die insbesondere durch die Enden von in der Belagscheibe angeordneten Stiften gebildet sind, wobei sich die Spitzen der aus härterem Material bestehenden Stifte beim Zusammenspannen in die Klemmfläche der Nockenelemente eindrücken.

In einer weiteren bevorzugten Ausführung sind die Nockenelemente aus einem Paket von Nockenscheiben aufgebaut, die nur eine geringe Dicke aufweisen. Die Nockenscheiben lassen sich in einfacher Weise aus Materialtafeln oder -platten ausstanzen oder ausschneiden. Die Dicke der Materialtafeln kann gering sein, da ja eine beliebige Anzahl miteinander verspannt werden kann - beispielsweise ist auch ein lamellenartiger Aufbau möglich - und es können daher die Nockenelemente aus sehr harten Materialien bestehen. Auch die Mischung von Scheiben bzw. Lamellen aus verschiedenen Materialien in einem Nockenelement ist denkbar.

Der Aufbau eines Nockenelementes aus Nockenscheiben bzw. Nockenelementen ermöglicht es weiters, in das Nockenelement selbst ein Zwischenelement einzubauen, das beispielsweise eine radiale Ölzufuhr für die Schmierung zwischen der Nockenfläche und der anliegenden Beteiligungsfläche eines Ventilstellgliedes (Ventilstößel, Schlepphebel, Kipphebel, usw.) ermöglicht. Bevorzugt weist ein derartiges Zwischenelement in der Berührungsfläche Rillen auf, die durch die benachbarte Nockenscheibe abgedeckt sind. Die Ölzufuhr erfolgt vorzugsweise durch den Spannstab, der in dieser Ausführung als hohle Trägerwelle ausgebildet ist.

Die axiale Einspannung der Nocken erlaubt weiters auch die Verwendung von Materialien, die bisher wegen zu hoher Spannungsrißanfälligkeit, zu geringer Zugbeanspruchbarkeit oder dergleichen nicht oder kaum einsetzbar waren. Beispielsweise können erfindungsgemäße Nockenwellen auch Nockenelemente aus Keramik, Schalenhartguß, aber auch aus Kunststoff oder dergleichen enthalten. Des weiteren können auch Nockenelemente verwendet werden, die in bisherigen Befestigungsverfahren mangels zu kleiner Verbindungsflächen nicht einsetzbar waren, beispielsweise sehr dünne Nockenscheiben, Nockenelemente aus nichtzylindrischen Hohlprofilen oder Formrohren, usw. Von besonderem Vorteil ist auch, daß die Durchstecköffnungen der Nockenelemente nur ungefähr fluchten müssen, da auch ein im Durchmesser geringfügig kleinerer Trägerstab eingesetzt werden kann.

Für die exakte Ausrichtung der Nockenwellenelemente sowie die richtige Winkelposition der einzelnen Nockenelemente können diese in zumindest ähnliche Haltevorrichtungen eingelegt und fixiert werden, wie sie beispielsweise auch für das eingangs beschriebene Aufweiten einer Hohlwelle und andere bekannte Herstellungsverfahren verwendet werden.

Es zeigen:
- Fig. 1: eine Schrägansicht einer ersten Ausführung einer Nockenwelle,
- Fig. 2: Bestandteile der Ausführung nach Fig. 1,
- Fig. 3: eine Schrägansicht einer zweiten Ausführung einer Nockenwelle,
- Fig. 4: eine Schrägansicht einer dritten Ausführung einer Nockenwelle,
- Fig. 5: Bestandteile der Ausführung nach Fig. 4,
- Fig. 6: eine Schrägansicht einer vierten Ausführung der Nockenwelle,
- Fig. 7: eine Schrägansicht einer fünften Ausführung einer Nockenwelle,
- Fig. 8: Bestandteile der Ausführung nach Fig. 7,
- Fig. 9: eine Schrägansicht einer sechsten Ausführung einer Nockenwelle,
- Fig. 10: Bestandteile der Ausführung nach Fig. 9,
- Fig. 11: eine Schrägansicht einer siebten Ausführung einer Nockenwelle,
- Fig. 12: Bestandteile der Ausführung nach Fig. 11,
- Fig. 13: eine Schrägansicht einer achten Ausführung einer Nockenwelle,
- Fig. 14: eine Schrägansicht einer neunten Ausführung einer Nockenwelle,
- Fig. 15: ein Schnitt in Schrägansicht durch eine abgewandelte Ausführung nach Fig. 14,
- Fig. 16: eine Seitenansicht einer zehnten Ausführung einer Nockenwelle,
- Fig. 17: eine Stirnansicht der Ausführung nach Fig. 16,
- Fig. 18: eine Draufsicht auf die Ausführung nach Fig. 16,
- Fig. 19: ein Schnitt nach der Linie XIX-XIX von Fig. 18,
- Fig. 20: Bestandteile einer elften Ausführung einer Nockenwelle,
- Fig. 21: eine Draufsicht auf die Ausführung von Fig. 20,
- Fig. 22: einen Schnitt nach der Linie XXII-XXII der Fig. 21,
- Fig. 23: eine Stirnansicht einer zwölften Ausführung einer Nockenwelle,
- Fig. 24: einen Schnitt nach der Linie XXIV-XXIV der Fig. 23,
- Fig. 25: eine Draufsicht auf eine dreizehnte Ausführung einer Nockenwelle,
- Fig. 26: einen Schnitt nach der Linie XXVI-XXVI der Fig. 25,
- Fig. 27: einen Schnitt nach der Linie XXVII-XXVII der Fig. 25,
- Fig. 28: Bestandteile der Ausführung nach Fig. 25, und
- Fig. 29: eine Schrägansicht dieser Ausführung.

Eine Nockenwelle 1 umfaßt in allen gezeigten Ausführungen einen als Spannstab ausgebildeten Trägerstab 2, auf dem durch axiale Klemmung bzw. Einspannung mittige Öffnungen 8 aufweisende Nockenelemente 5 zwischen Spannelementen fixiert sind. Bevorzugt werden zusätzlich auch Lagerelemente 4, Distanzelemente 12, Zwischenelemente 20, 26 und Antriebselemente 3 durch die axiale Klemmung fixiert, wobei für die Herstellung einer erfindungsgemäßen Nockenwelle 1 die Nockenwellenelemente in eine Form oder Haltevorrichtung in der richtigen Lage und Winkelstellung vorläufig fixiert werden.

Die axialen Spannkräfte werden bevorzugt dadurch erzeugt, daß der zugelastische Trägerstab 2 von einer äußeren Spannvorrichtung um ein definiertes Ausmaß, vorzugsweise zwischen 4 und 6 Promille gestreckt wird, und nach Positionierung der Elemente die Längenänderung des Trägerstabes 2 durch die Spannelemente gesichert wird, sodaß die äußere Spannvorrichtung wieder entfernt werden kann. Die Spannkräfte können dadurch auf jeden bestimmten Wert eingestellt werden.

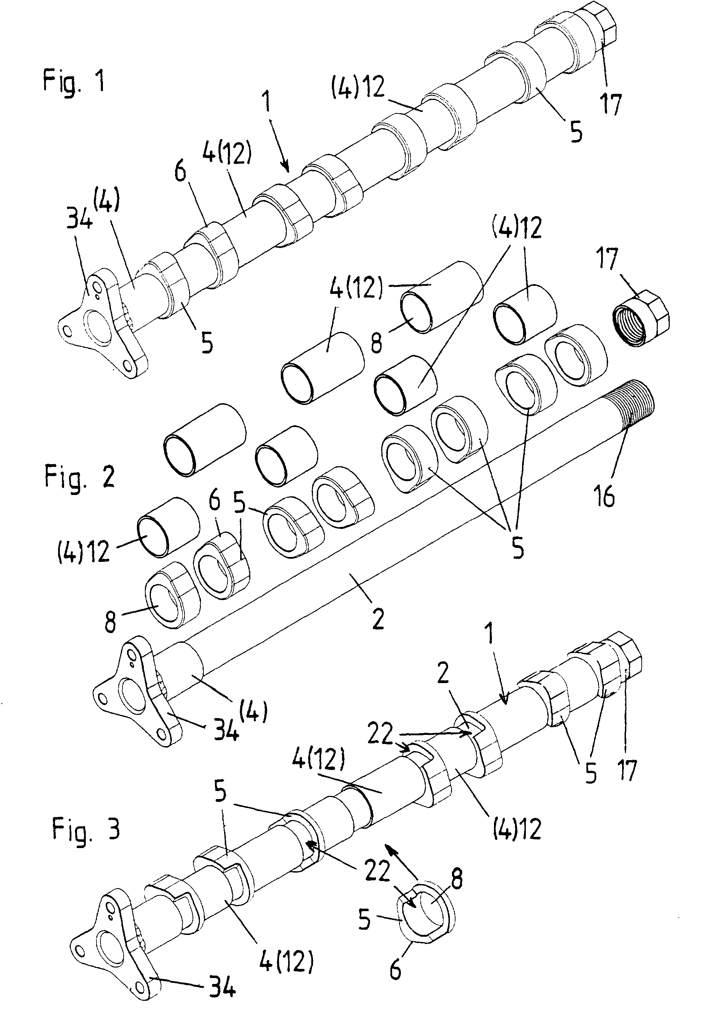

In den Ausführungsbeispielen gemäß Fig. 1, 3 und 14 umfaßt die Nockenwelle für die axiale Klemmung der Nockenwellenelemente jeweils einen Trägerstab 2 mit vollem Querschnitt, der einen festen Endflansch 34 zur Verbindung mit einem Antriebselement am einen Ende und einen Gewindeabschnitt 16 am anderen Ende aufweist, auf den ein als Gewindemutter oder Gewindehülse ausgebildetes Spannelement 17 aufschraubbar ist. Da an den Enden Gewindeabschnitte 16 vorhanden sind, können auch die Zugmuttern der Spannvorrichtung an diesen angesetzt werden.

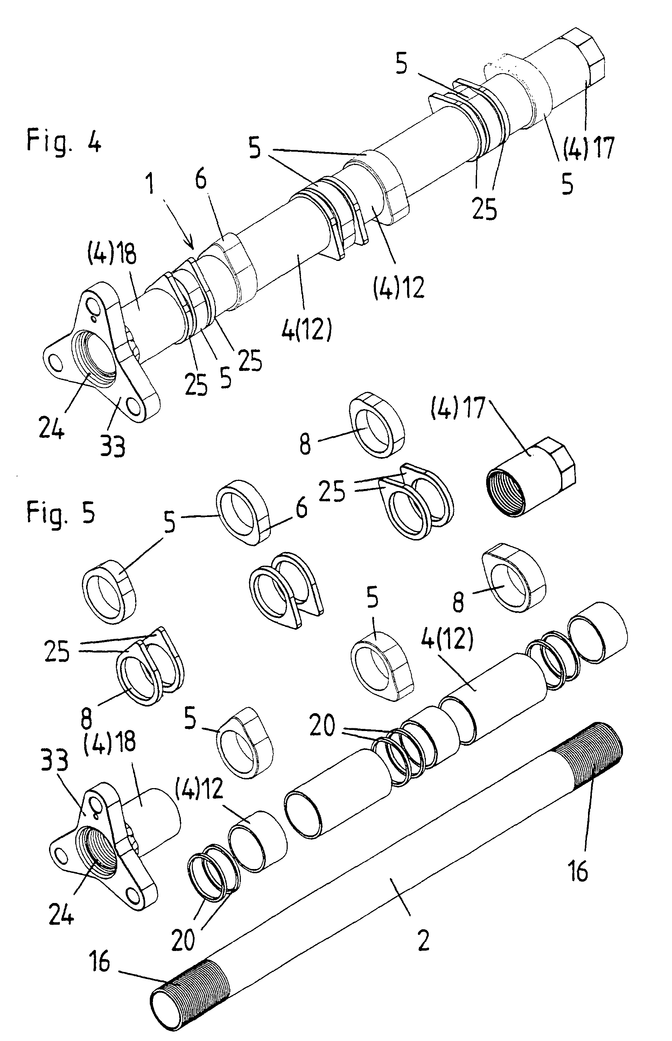

In den Ausführungsbeispielen gemäß Fig. 4, 6, 7, 9, 11 und 13 ist der Trägerstab 2 als Rohr dargestellt und an beiden Enden mit einem Gewindeabschnitt 16 versehen, sodaß auch ein Antriebselement 3 axial eingespannt werden kann.

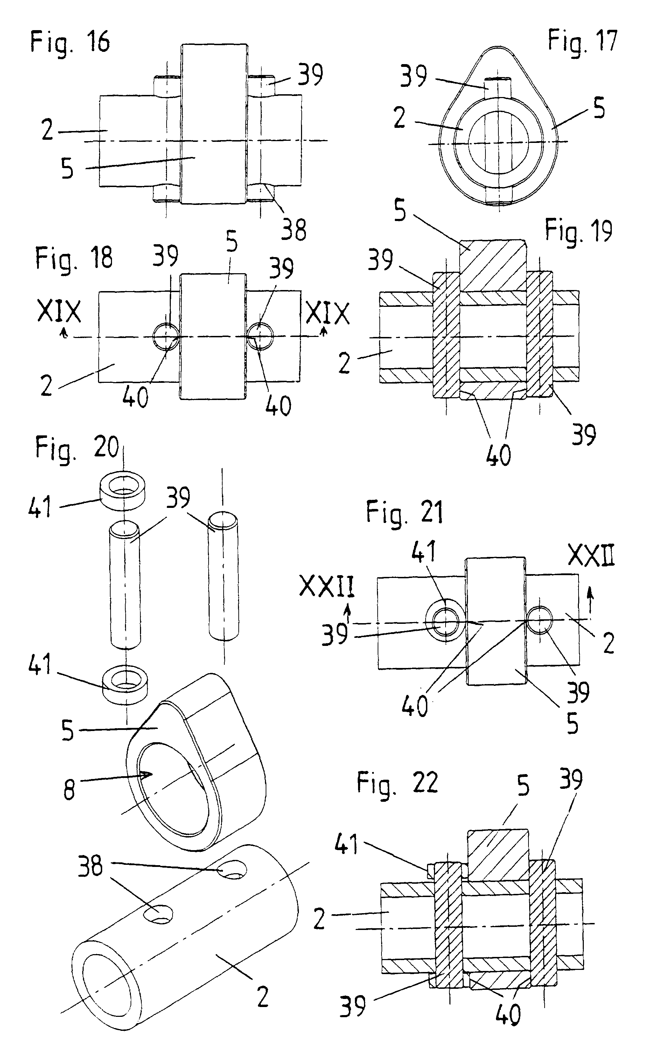

Auch in den Ausführungsbeispielen gemäß Fig. 16, 20, 23 und 25, in denen jeweils nur ein Bereich des Trägerstabes 2 mit einem oder zwei Nockenelementen 5 gezeigt ist, können die beiden Enden des Trägerstabes 2 trotz anderer Spannelemente mit Gewindeabschnitten 16 versehen sein, um Zugmuttern einer Spannvorrichtung aufzunehmen.

Alternativ können die Spannkräfte auch durch eine Abkühlung des zuvor erwärmten Trägerstabes 2 erreicht werden, während die jeweilige Umkehrung, nämlich die Verkürzung der einzuspannenden Elemente durch Druck oder Kühlung nur mit größerem Aufwand und in besonderen Fällen sinnvoll einsetzbar ist.

Im einzelnen zeigen Fig. 1 und 2 eine erste Ausführung einer Nockenwelle 1, in der alle Nockenwellenelemente gemeinsam durch das nach Dehnung des Spannstabes 2 um etwa fünf Promille auf den Gewindeabschnitt 16 aufschraubbare einzige Spannelement 17 gegen den mit einem Antriebselement verbindbaren festen Endflansch 34 gespannt werden. Als Nockenwellenelemente sind in dieser Ausführung acht Nockenelemente 5 in paarweise gleicher Winkelstellung vorgesehen, wobei zwischen den Nockenelementen 5 mit jeweils gleicher Ausrichtung der Nocken 6 jeweils eine Distanzhülse 12 und zwischen den Paaren von Nockenelementen 5 jeweils eine Lagerhülse 4 angeordnet ist, die wie durch die in Klammern gesetzte Bezugsziffern gezeigt, auch vertauschte Funktionen haben können.

Fig. 3 zeigt eine im Aufbau gleiche Ausführung, in der jedoch der Grundkreis der Nockenelemente 5 Aussparungen 22 aufweist, und dadurch jeweils schmäler ist. Im Bereich der Aussparungen 22 ist der Spannstab 2 sichtbar.

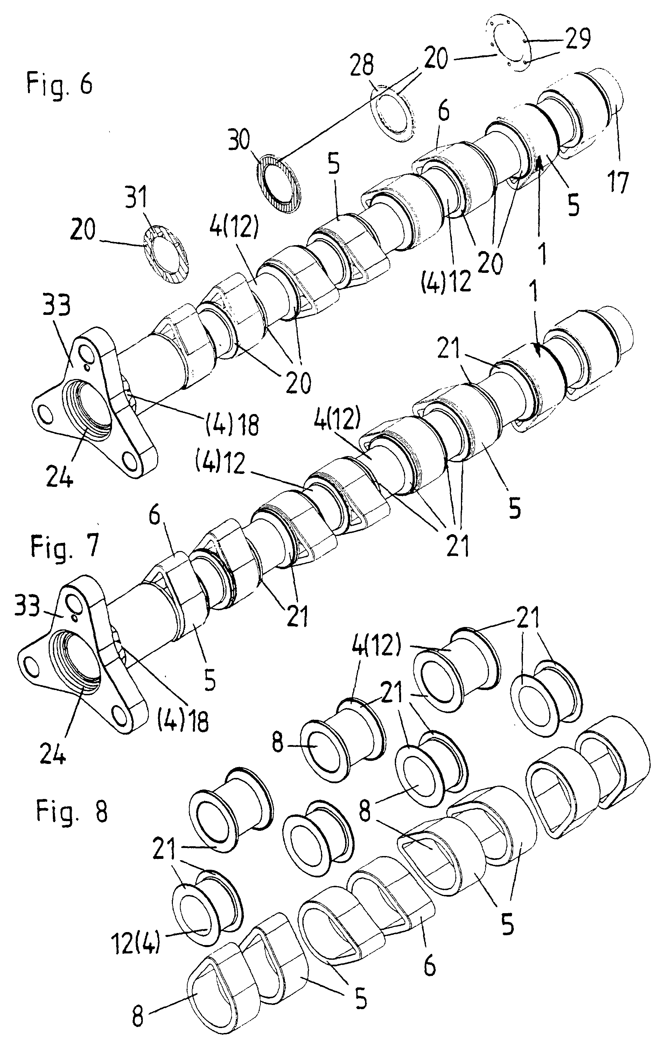

Fig. 4 und 5 zeigt eine Nockenwelle 1, bei der jedem Nockenelement 5 für ein Kraftstoffeinlaß- oder -auslaßventil zwei dünnere Nockenscheiben 25 zugeordnet sind, deren Nocken gegenüber den Nocken 6 des Nockenelementes 5 geringfügig verdreht sind. Die Nockenwelle 1 ist insbesondere zur Betätigung von schaltbaren Ventilstößeln vorgesehen, wobei die Ventilöffnungszeit verlängert ist, wenn auch die Nockenscheiben 25 zum Einsatz kommen. Wie aus Fig. 5 ersichtlich, sind zwischen den Nockenscheiben 25 und dem dazwischen liegenden Nockenelement 5 Beilagscheiben 20 angeordnet, deren seitliche Ringflächen mit kraftschlußerhöhenden Mitteln versehen sein können, die an Hand der Fig. 6 näher erklärt werden.

In dieser Ausführung weist der Spannstab 2 an beiden Enden Gewindeabschnitte 16 auf, auf denen jeweils ein Spannelement 17, 18 vorgesehen ist. Ein zur Verbindung mit einem Antriebselement vorgesehener Endflansch 33 ist mit dem zweiten als Gewindemutter bzw. Gewindehülse ausgebildeten Spannelement 18 verbunden.

Die Nockenwelle 1 in der Ausführung nach Fig. 6 und 7 weist Spannelemente 17, 18, Nockenelemente 5, Lagerelemente 4 und Distanzelemente 12 auf, zwischen denen als Zwischenelemente jeweils kraftschlußerhöhende Beilagscheiben 20 angeordnet sind. Die kraftschlußerhöhenden Maßnahmen umfassen an den Ringflächen bzw. Klemmflächen eine Klebstoffbeschichtung 28 oder einen Reibbelag 30, Aufrauhungen oder anderweitige Unebenheiten 31, oder gehärtete Spitzen 29, die beispielsweise an achsparallel eingesetzten Stiften vorgesehen sind, und sich bei der axialen Verspannung in die Klemmflächen der Nockenwellenelemente 4, 5, 12 eindrücken.

Fig. 8 zeigt die Bestandteile einer weiteren Ausführung einer axial verspannten Nockenwelle 1, wobei zum Unterschied von Fig. 6 und 7 in dieser Ausführung an den Lagerhülsen 4 bzw. Distanzhülsen 12 Flansche 21 angeordnet sind, sodaß die Hülsen 4 oder 12 ein spulenartiges Aussehen aufweisen. Die Flansche 21 vergrößern die Spannfläche der Zwischenelemente, wobei die zu den Nockenelementen 5 weisenden Flächen mit kraftschlußverstärkenden Maßnahmen ausgestattet sein können, also beispielsweise einen Klebe- oder Reibbelag aufweisen, gerauht oder uneben sein können, usw. Insbesondere eine Ausführung mit durch Flansche 21 vergrößerten Spannteilen der Zwischenelemente 4, 12 eignet sich für Nockenelemente 5, deren mittlere Öffnung 8 der Nockenkontur gleicht, sodaß die Wandstärken der Nockenelemente 5 im wesentlichen überall gleich sind. Derartige Nockenelemente können beispielsweise durch Umformen eines zylindrischen Rohrstückes erzeugt werden.

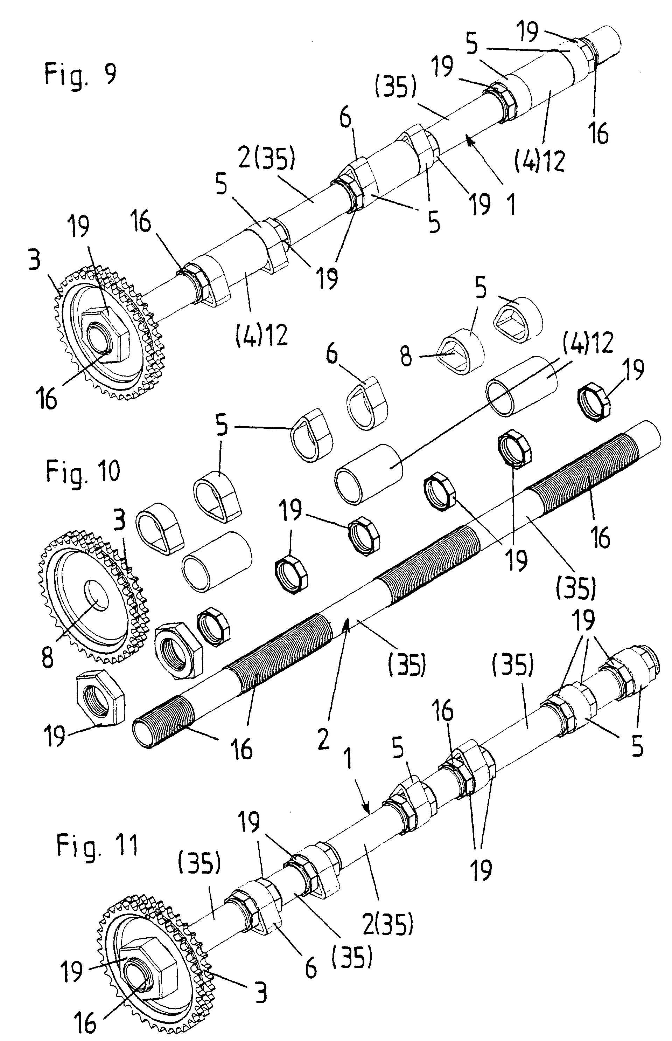

Die Ausführung nach Fig. 9 und 10 zeigt eine Nockenwelle 1, in der der Spannstab 2 mehrere Gewindeabschnitte 16 aufweist, wobei auf jedem Gewindeabschnitt 16 eine aus einer Distanzhülse 12 und zwei Nockenelementen 5 bestehende Gruppe von Nockenwellenelementen zwischen zwei als Spannelemente 19 dienenden Gewindemuttern eingespannt ist. Auch ein Antriebselement 3 ist mittels zweier Gewindemuttern auf dem Spannstab 2 fixiert.

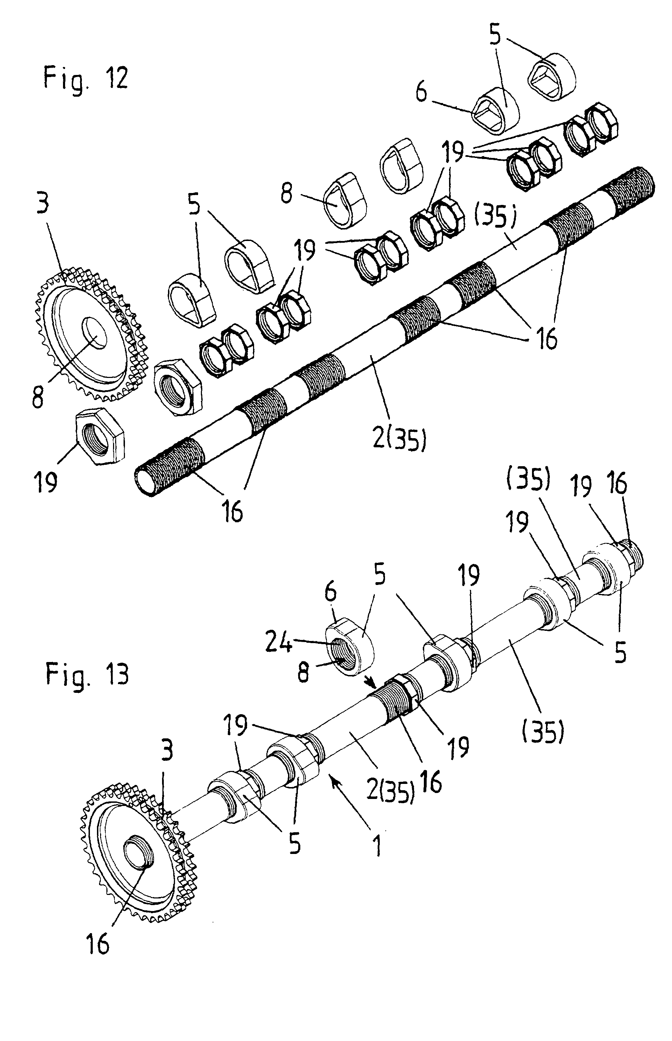

Eine ähnliche Ausführung zeigen Fig. 11 und 12. Hier ist jedes Nockenelement 5 einzeln und das Antriebselement 3 mittels zweier Spannelemente 19 in Form von Gewindemuttern auf dem Spannstab 2 festgelegt. Die freiliegenden Abschnitte 35 des vollen oder hohlen Spannstabes 2 können als Lagerbereiche herangezogen werden, und sind im Durchmesser geringer, sodaß die Gewindemuttern zwischen den Gewindeabschnitten 16 verschoben werden können.

Fig. 13 zeigt eine Ausführung, in der die Nockenelemente 5 und das Antriebselement 3 mit einem Innengewinde 24 versehen sind, sodaß auf jedem Gewindeabschnitt 16 nur ein Spannelement 19 in Form einer Gewindemutter 19 benötigt wird, die gegen das Nockenelement 5 bzw. das Antriebselement 3 gespannt ist.

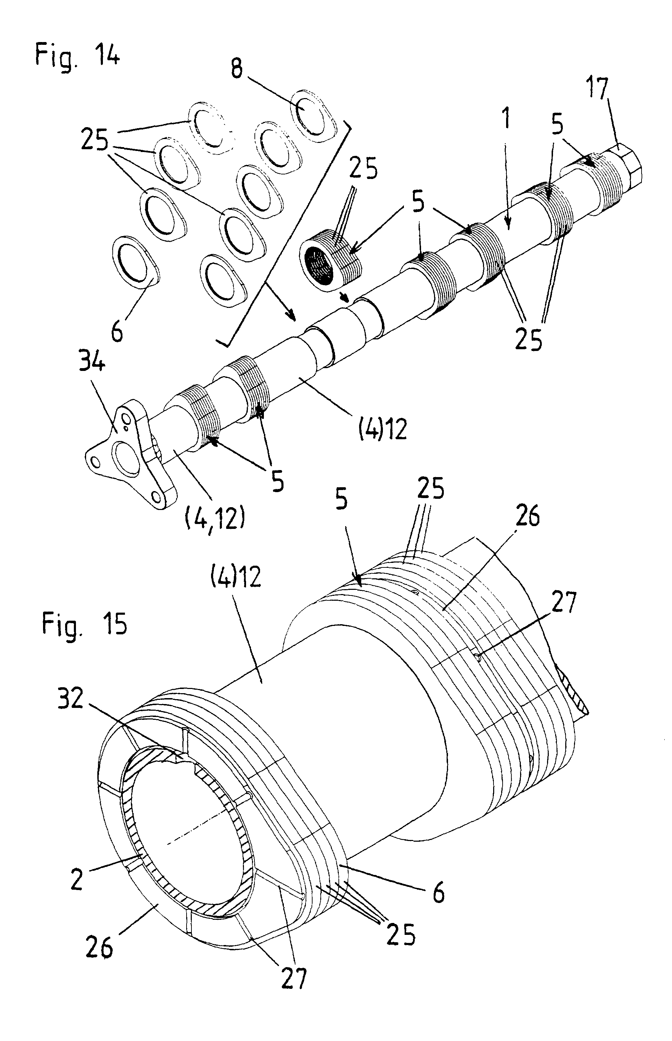

Fig. 14 und 15 zeigen eine Ausführung, in der die Nockenelemente 5 jeweils aus einem Paket von Nockenscheiben 25 bzw. Nockenlamellen zusammengesetzt und verspannt sind. Die Nockenscheiben 25 können aus einer Materialtafel ausgestanzt werden, sodaß die Festigung extrem vereinfacht wird. Die Breite der Nockenelemente 5 kann in einfacher Weise variiert werden, wenn mehr oder weniger Nockenlamellen aneinandergefügt werden. Fig. 15 zeigt, daß eine mittlere Nockenlamelle bzw. ein Zwischenelement 26 radiale Rillen 27 aufweist, die nach Abdeckung durch ein weiteres gerilltes Zwischenelement 26 oder eine weitere Nockenlamelle oder Nockenscheibe 25 zu Kanälen geschlossen werden, durch die Öl zu einem Ventilbetätigungsglied zugeführt werden kann, das durch den hohlen Spannstab 2 und entsprechenden Austrittsöffnungen 32 zugeführt werden kann.

In der in den Fig. 16 bis 19 gezeigten Ausführung ist der Spannstab 2 mit mindestens einem Paar, bevorzugt jedoch pro Nockenelement 5 mit einem Paar von axial beabstandeten Bohrungen 38 versehen, in die als Spannelemente Splinte 39 eingesteckt werden. Dabei muß im Gegensatz zu Gewindeabschnitten, auf denen eine axiale Verstellbarkeit der Spannelemente innerhalb der gegebenen Grenze möglich ist, die Lage der Bohrungen 38 vorher definiert werden, wobei die durch die äußere Krafteinwirkung zu erzielende Längenänderung, die bevorzugt in einem Bereich zwischen vier und sechs Promille liegt, einzurechnen ist. Die Bohrungen 38 werden daher beispielsweise so angeordnet, daß der Abstand zwischen den Anlageflächen 40 der Splinte 39 an den Klemmflächen des Nockenelementes 5 99,5 % der axialen Erstreckung des einzuspannenden Nockenelementes 5 beträgt. Nachdem der Spannstab 2 um gut fünf Promille gedehnt worden ist, können die Splinte 39 lose in die Bohrungen 38 eingesteckt werden, und übertragen nach Abnahme der Spannvorrichtung die in den Spannstab 2 eingeleitete Spannkräfte auf die eingespannten Nockenelemente.

In der Ausführung nach den Fig. 20 bis 22 ist ein Splint 39 mit Exzenterringen 41 od. dgl. versehen, an denen die Anlagefläche 40 vorgesehen ist. Der Abstand der beiden Bohrungen 38 ist um die mittlere Dicke der Exzenterringe 41 größer, sodaß nach der Dehnung des Spannstabes 2 eine spielfreie Anlage der Spannelemente am Nockenelement 5 erzielt werden kann, indem die Exzenterringe 41 verdreht werden in beiden Ausführungen können die Splinte 39 und/oder die Exzenterelemente 41 auch durch Schneiden oder Kanten gebildete Anlageflächen 40 aufweisen, die eine geringfügige Einkerbung in die Klemmfläche des Nockenelementes 5 bewirken, sodaß auch ein Formschluß erzielt wird.

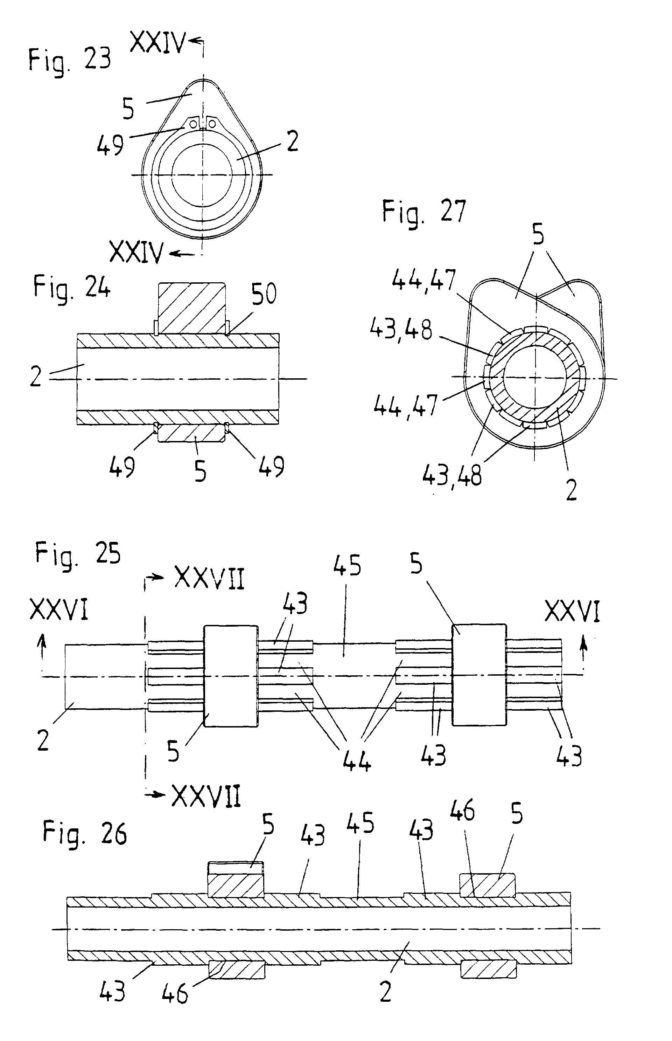

In der Ausführung gemäß Fig. 23 und 24 sind als Spannelemente geschlitzte Federringe 49 in Umfangsnuten 50 des Spannstabes eingesetzt, die paarweise die axiale Einspannung eines Nockenelementes bewirken, sobald die äußere Einwirkung aufgehoben wird.

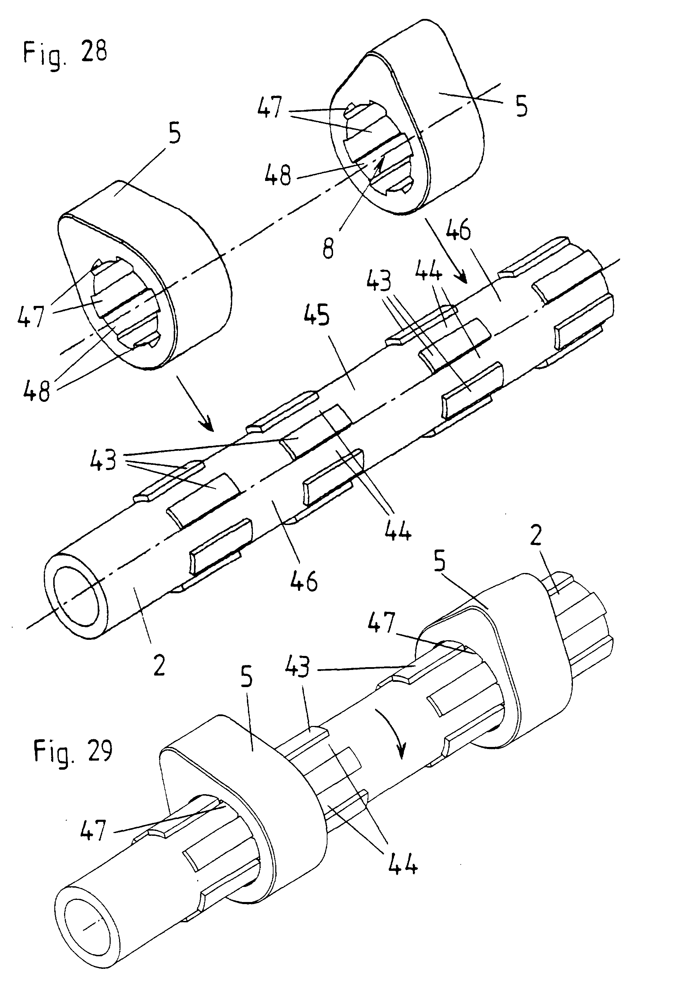

Fig. 25 bis 29 zeigt eine Ausführung, in der alle Spannelemente als feste Vorsprünge des Spannstabes 2 ausgebildet sind. Der Spannstab 2 ist beiderseits der Montagestellen 46 (Fig. 28) für ein Nockenelement 45 mit je einem Kranz von achsparallelen Stegen 43 versehen, zwischen denen Nuten 44 gebildet sind, deren Boden in der Umfangsfläche der Montagestelle 46 und eines Zwischenbereiches 45 liegt, der beispielsweise eine Lagerstelle für den Spannstab 2 bilden kann. Die Nockenelemente 5 dieser Ausführung weisen eine zentrale Öffnung 8 auf, in der Nuten 47 und Stege 48 ausgebildet sind, wobei alle Stege 43, 48 und alle Nuten 44, 47 die gleiche Breite aufweisen. Jedes Nockenelement 5 kann daher vom Ende des Spannstabes 2 bis zur Montagestelle 46 eingeschoben werden, deren axiale Erstreckung kleiner als die des Nockenelementes 5 ist. Nach Dehnung des Spannstabes 2 kann das Nockenelement 5 gedreht werden, bis die Nuten 44, 47 und Stege 43, 48 jeweils fluchten. Wird nun die Spannvorrichtung entfernt, so drücken die Stirnflächen der Stege 43 an die Stirnflächen der Stege 48. Die axiale Verspannung der Nockenelemente erfordert somit keine losen Spannelemente. Die Anzahl der Stege und Nuten beträgt vorzugsweise vier oder sechs, sodaß die Nockenelemente 5 in unterschiedlichen Winkelpositionen einspannbar sind.

Die in den Fig. 9 bis 13 und 16 bis 29 gezeigten Nockenwellen weisen Spannstäbe 2 auf, an denen sich unter Zugspannung stehende Montagebereiche mit Nockenelementen 5 und nicht unter Zugspannung stehende Zwischenbereiche, beispielsweise Lagerstellen, abwechseln.

Wenngleich die im Detail gezeigten und beschriebenen Ausführungsbeispiele nur zugelastische Spannstäbe 2 enthalten, so ist die Verwendung von durch Wärmezufuhr verlängerbaren Trägerstäben ebenso möglich, die nach Kühlung auf Normal- oder maximale Betriebstemperatur ebenfalls eine Einspannung der Nockenwellenelemente bewirken.

## Patentansprüche

1. Verfahren zur Herstellung einer gebauten Nockenwelle (1), die auf einem im Bereich jedes Nockenwellenelementes zylindrischen Trägerstab (2) zwischen Spannelementen durch Einspannung verdrehgesicherte Nockenelemente (5) und gegebenenfalls auch Lager- und/oder Zwischenelemente aufweist, wobei die Einspannung ausschließlich in axialer Richtung wirkt, **dadurch gekennzeichnet, daß** auf dem Trägerstab (2) Montagepositionen für Spannelemente definiert werden, wobei die axiale Erstreckung des Trägerstabs (2) zwischen den Montagepositionen der Spannelemente kleiner ist als die axiale Erstreckung der einzuspannenden Nockenwellenelemente, daß durch eine äußere Einwirkung die beiden unterschiedlichen axialen Erstreckungen ausgeglichen werden, daß nach dem Längenausgleich die Nockenwellenelemente in die Einspannpositionen und die Spannelemente in die Montagepositionen gebracht werden, in denen der Längenausgleich durch die Spannelemente gesichert ist, und daß die äußere Einwirkung wieder aufgehoben wird.

2. Verfahren nach Anspruch 1, **dadurch gekennzeichnet, daß** als Trägerstab (2) ein zugelastischer Spannstab verwendet wird, der durch eine äußere Krafteinwirkung gedehnt wird.

3. Verfahren nach Anspruch 1, **dadurch gekennzeichnet, daß** der Trägerstab (2) erwärmt und/oder die einzuspannenden Elemente gekühlt werden.

4. Verfahren nach einem der Ansprüche 1 bis 3, **dadurch gekennzeichnet, daß** der Trägerstab mit zwei endseitigen Spannelementen (17,18) versehen wird, zwischen denen alle Elemente (3,4,5,12,20,25,26) der Nockenwelle eingespannt werden.

5. Verfahren nach Anspruch 1 bis 3, **dadurch gekennzeichnet, daß** der Trägerstab (2) pro Nockenelement (5) mit zwei Spannelementen versehen wird, zwischen denen die Nockenelemente (5) jeweils einzeln eingespannt werden.

6. Verfahren nach einem der Ansprüche 1 bis 5, **dadurch gekennzeichnet, daß** der Trägerstab (2) mit zumindest einem axial beabstandeten Paar von Bohrungen (38) versehen wird, in die als Spannelemente aus dem Trägerstab (2) vorstehende Splinte (39) eingesteckt werden.

7. Verfahren nach einem der Ansprüche 1 bis 5, **dadurch gekennzeichnet, daß** der Trägerstab (2) mit zumindest einem axial beabstandeten Paar von Umfangsnuten (50) versehen wird, in die als Spannelemente Federringe (49) eingesetzt werden.

8. Verfahren nach einem der Ansprüche 1 bis 5, **dadurch gekennzeichnet, daß** auf dem Trägerstab (2) als Spannelemente zumindest ein axial beabstandetes Paar von Vorsprüngen ausgebildet werden, die den halben Umfang des Trägerstabes umfassen, und die Nockenelemente mit den Vorsprüngen entsprechenden Nuten versehen werden, wobei die Nockenwellenelemente axial aufgeschoben und in die Einspannpositionen verdreht werden.

9. Verfahren nach Anspruch 8, **dadurch gekennzeichnet, daß** die Vorsprünge in über den Umfang des Trägerstabes (2) verteilte Stege (43) aufgeteilt werden, wobei jeder Steg (43) gleich breit wie der Zwischenraum (44) zwischen zwei Stegen (43) ist.

10. Verfahren nach einem der Ansprüche 1 bis 5, **dadurch gekennzeichnet, daß** der Trägerstab (2) mit zumindest einem axial beabstandeten Paar von Gewindeabschnitten (16) versehen wird, auf denen Spannelemente (18) mit Innengewinde in die Montagepositionen gebracht werden.

## Claims

1. A process for producing a built-up camshaft (1) which on a carrier bar (2) which is cylindrical in the region of each camshaft element has camshaft elements (5) which are secured against rotation by clamping between clamping elements and optionally also bearing and/or intermediate elements, wherein the clamping action is operative exclusively in the axial direction, **characterised in that** mounting positions for clamping elements are defined on the carrier bar (2), wherein the axial extent of the carrier bar (2) between the mounting positions of the clamping elements is less than the axial extent of the camshaft elements to be clamped, that the two different axial extents are compensated by an external action, that after length compensation the camshaft elements are put into the clamping positions and the clamping elements are put into the mounting positions in which the length compensation effect is secured by the clamping elements, and that the external action is removed again.

2. A process according to claim 1 **characterised in that** the carrier bar (2) used is in the form of a clamping bar which has tensile elasticity and which is stretched by an external force acting thereon.

3. A process according to claim 1 **characterised in that** the carrier bar (2) is heated and/or the elements to be clamped are cooled.

4. A process according to one of claims 1 to 3 **characterised in that** the carrier bar is provided with two end clamping elements (17, 18), between which all elements (3, 4, 5, 12, 20, 25, 26) of the camshaft are clamped.

5. A process according to claims 1 to 3 **characterised in that** for each cam element (5) the carrier bar (2) is provided with two clamping elements between which the cam elements (5) are respectively individually clamped.

6. A process according to one of claims 1 to 5 **characterised in that** the carrier bar (2) is provided with at least one axially spaced pair of bores (38) into which cotter pins (39) projecting out of the carrier bar (2) are fitted as clamping elements.

7. A process according to one of claims 1 to 5 **characterised in that** the carrier bar (2) is provided with at least one axially spaced pair of peripheral grooves (50) into which spring rings (49) are fitted as clamping elements.

8. A process according to one of claims 1 to 5 **characterised in that** provided on the carrier bar (2) as clamping elements are at least one axially spaced pair of projections which embrace half the periphery of the carrier bar and the cam elements are provided with grooves corresponding to the projections, wherein the camshaft elements are axially pushed on and turned into the clamping position.

9. A process according to claim 8 **characterised in that** the projections are divided into lands (43) which are distributed over the periphery of the carrier bar (2), wherein each land (43) is of the same width as the intermediate space (44) between two lands (43).

10. A process according to one of claims 1 to 5 **characterised in that** the carrier bar (2) is provided with at least one axially spaced pair of screwthread portions (16), on which clamping elements (18) with a female screwthread are put into the mounting positions.

## Revendications

1. Procédé de fabrication d'un arbre à cames (1) monté qui présente, sur une barre de support (2) de forme cylindrique au niveau de chaque élément de l'arbre à cames, entre des éléments de fixation, des éléments de cames (5) retenus en rotation par fixation ainsi que, le cas échéant, des paliers et/ou éléments intermédiaires, la fixation opérante seulement en direction axiale ; **caractérisé en ce que** des positions de montage sont définies sur cette barre de support (2) pour des éléments de fixation, moyennant quoi l'extension axiale de la barre de support (2) entre les positions de montage des éléments de fixation est plus petite que l'extension axiale des éléments de l'arbre à cames à fixer ; **en ce que** les deux extensions axiales différentes peuvent être égalisées sous l'effet d'une action externe, et **en ce qu'**après cette égalisation, les éléments d'arbres à cames sont dans leurs positions de fixation et les éléments de fixation dans leurs positions de montage, positions dans lesquelles les éléments de fixation maintiennent l'égalisation, et **en ce que** l'action externe peut cesser.

2. Procédé selon la revendication 1, **caractérisé en ce que** la barre support (2) utilisée est une barre de tension élastique qui est étirée sous l'effet d'une force externe.

3. Procédé selon la revendication 1, **caractérisé en ce que** la barre support (2) est chauffée et/ou les éléments à fixer sont refroidis.

4. Procédé selon les revendications 1 à 3, **caractérisé en ce que** la barre support possède, au niveau de ses extrémités, deux éléments de fixation (17, 18) entre lesquels tous les éléments (3, 4, 5, 12, 20, 25, 26) de l'arbre à cames sont fixés.

5. Procédé selon les revendications 1 à 3, **caractérisé en ce que** la barre support (2) possède, par élément de came (5), deux éléments de fixation entre lesquels est fixé séparément chaque élément de came (5).

6. Procédé selon les revendications 1 à 5, **caractérisé en ce que** la barre support (2) possède au moins une paire d'orifices (38) espacés de manière axiale, dans lesquels sont insérées des clavettes (39) dépassant de la barre support (2) et faisant office d'éléments de fixation.

7. Procédé selon l'une des revendications 1 à 5, **caractérisé en ce que** la barre support (2) possède au moins une paire de rainures circulaires (50) espacées de manière axiale, dans lesquelles sont insérées des rondelles à ressort (49) faisant office d'éléments de fixation.

8. Procédé selon l'une des revendications 1 à 5, **caractérisé en ce qu'**est formée sur la barre support (2) en tant qu'éléments de fixation au. moins une paire de saillies espacées de manière axiale et englobant la moitié de la circonférence de la barre support, et **en ce que** les éléments de cames possèdent des rainures correspondant à ces saillies ; moyennant quoi les éléments des arbres à cames sont déplacés de manière axiale et tournés dans les positions de fixation.

9. Procédé selon la revendication 8, **caractérisé en ce que** les saillies sont constituées d'épaulements (43) répartis sur la circonférence de la barre support (2), chaque épaulement (43) étant de largeur égale à celle de l'espacement (44) entre deux épaulements (43).

10. Procédé selon l'une des revendications 1 à 5, **caractérisé en ce que** le bras support (2) possède au moins une paire de sections filetées (16) espacées de manière axiale, sur lesquelles des éléments de fixation (18) à filetages internes sont amenés dans les positions de montage.
